# EUROPEAN PATENT APPLICATION

(11) **EP 4 786 424 A1**
(43) Date of publication of application: **05.08.2026**
(21) Application number: 24872192.0
(22) Date of filing: 24.09.2024
(51) Int. Cl.: C03B 37/012, C03B 37/028, G02B 6/02

(54) **MULTICORE FIBER PREFORM MANUFACTURING METHOD AND MULTICORE FIBER MANUFACTURING METHOD**

(30) Priority: 29.09.2023 JP 2023169141
(71) Applicant: Lightera Japan Co., Ltd., Tokyo 100-8322 (JP)
(72) Inventor: MUKASA, Kazunori, Tokyo 100-8322 (JP); KOBAYASHI, Yoshitomo, Tokyo 100-8322 (JP); AISO, Keiichi, Tokyo 100-8322 (JP)
(74) Representative: SSM Sandmair
(86) International application number: PCT/JP2024/033960
(87) International publication number: WO 2025/070402

(57) **Abstract**

A method of manufacturing a multicore fiber preform including a plurality of core portions and a cladding portion surrounding outer peripheries of the plurality of core portions and having a lower refractive index than maximum refractive indices of the plurality of core portions includes: a first process of inserting each of core preforms each including one of the core portions into each of holes arranged in a longitudinal direction of a central cladding preform, the central cladding preform having a rod-shape and being configured to form a part of the cladding portion; a second process of integrating the central cladding preform and the core preforms; and a third process of arranging an outer cladding portion that forms a part of the cladding portion on an outer periphery of the central cladding preform.

## Description

### Field

The present invention relates to a method of manufacturing a multicore fiber preform and a method of manufacturing a multicore fiber.

### Background

As a method of manufacturing a multicore fiber preform, various kinds of manufacturing methods are being actively examined. For example, a flame deposition method (hereinafter, may be simply referred to as a deposition method) is the most attractive method in terms of a low-cost technology that is established as a conventional fiber manufacturing method. However, it is frequently reported that a problem occurs when the technology is applied to a multicore fiber. For example, a multicore fiber preform includes a plurality of core portions, and therefore, even when a flame soot is to be deposited, the flame soot interferes with any of the core portions. Therefore, the soot is not uniformly deposited around a specific core portion, and voids remain in the multicore fiber preform, which is a problem. To cope with this, as techniques for preventing voids from remaining, techniques described in Patent Literature 1 and Patent Literature 2 have been proposed.

However, in the technique in Patent Literature 1, it is needed to prepare a core rod of a polygonal shape, which leads to a problem in that a process becomes complicated. In contrast, in Patent Literature 2, a technique is proposed in which, when a cladding portion of a multicore fiber is to be manufactured, a first clad is formed in the vicinity of a central rod and a second clad is formed on an outer side of the first clad. This technique corresponds to the deposition method and is a good proposal because it is possible to solve a problem with voids without complicating the conventional method; however it is still needed to perform complicated control on the way of deposition and conditions.

As another mature clad forming method in addition to the deposition method, a jacket method for inserting a core preform in a cladding pipe and integrating them is known. However, when this method is applied to a multicore fiber, it is needed to form a plurality of core preforms between jackets by a stack method, so that a glass rod with a small diameter is needed to fill gaps between the jackets and very complicated processes are needed. As a means for solving the problem as described above, as described in Non Patent Literature 1 for example, a technique of forming an interior by the stack method and forming a clad by the deposition method on an outer side while adjusting a non-circle has been proposed, but a complicated stack process is still needed.

In contrast, a perforation method is a manufacturing method that is widely used in manufacturing a multicore fiber preform, and many reports have been made.

### Citation List

### Patent Literature

Patent Literature 1: Japanese Laid-open Patent Publication No. H9-5541
Patent Literature 2: Japanese Patent No. 5740065

### Non Patent Literature

Non Patent Literature 1: P. Sillard et al., "Simple Multi-Core Fiber Fabrication Method", Th1A.1, ECOC 2022

### Summary

### Technical Problem

However, in the perforation method, a process of heating and integrating core preforms and a cladding preform is needed. Therefore, when a size of the cladding preform increases, an amount of heat to be applied for the integration increases. Consequently, the core preforms or the cladding preform may be thermally deformed accidentally, air bubbles may remain in the multicore fiber preform because of insufficient integration due to short of the heat amount, or a large-scale and expensive heat source may be needed to apply a needed amount of heat, which is a problem.

The present invention has been conceived in view of the foregoing situations, and an object of the present invention is to provide a method of manufacturing a multicore fiber preform and a method of manufacturing a multicore fiber suitable for manufacturing of a large-scale multicore fiber preform.

### Solution to Problem

To solve the above-described problem and achieve the object, one aspect of the present invention is a method of manufacturing a multicore fiber preform including: a plurality of core portions; and a cladding portion surrounding outer peripheries of the plurality of core portions and having a lower refractive index than maximum refractive indices of the plurality of core portions, the method including: a first process of inserting each of core preforms each including one of the core portions into each of holes arranged in a longitudinal direction in a central cladding preform, the central cladding preform having a rod-shape and being configured to form a part of the cladding portion; a second process of integrating the central cladding preform and the core preforms; and a third process of arranging an outer cladding portion configured to form a part of the cladding portion on an outer periphery of the central cladding preform.

The third process may include arranging the outer cladding portion by using one of a deposition method or a jacket method.

The second process may include heating the central cladding preform and the core preforms while forming vacuum states in gaps between the central cladding preform and the core preforms.

Refractive indices of the central cladding preform and the outer cladding portion may be approximately equal to each other.

When a radius of a circumcircle circumscribed about outer edges of the plurality of core preforms in a cross section perpendicular to a longitudinal direction of the multicore fiber preform is denoted by A and an outer radius of the central cladding preform is denoted by B, B/A may be equal to or larger than 1.05, and further B/A may be equal to or smaller than 10.

When an outer radius of the central cladding preform in a cross section perpendicular to a longitudinal direction of the multicore fiber preform is denoted by B and an outer radius of the outer cladding portion is denoted by C, C/B may be equal to or larger than 1.10.

One aspect of the present invention is a method of manufacturing a multicore fiber including: a multicore fiber preform manufacturing process of performing the method of manufacturing the multicore fiber preform; and a drawing process of drawing a multicore fiber from the manufactured multicore fiber preform.

### Advantageous Effects of Invention

According to the present invention, it is possible to realize a method of manufacturing a multicore fiber preform and a method of manufacturing a multicore fiber suitable for manufacturing of a large-scale multicore fiber preform.

### Brief Description of Drawings

FIG. 1 is a schematic cross-sectional view of a multicore fiber preform that is manufactured by a manufacturing method according to a first embodiment.
FIG. 2 is a diagram illustrating a refractive index profile of a core portion of the multicore fiber preform.
FIG. 3 is a flow diagram of a method of manufacturing the multicore fiber preform illustrated in FIG. 1.
FIG. 4 is a diagram for explaining a manufacturing process.
FIG. 5 is a diagram for explaining the manufacturing process.
FIG. 6 is a flow diagram of a method of manufacturing a multicore fiber according to a second embodiment.
FIG. 7 is a schematic cross-sectional view of a multicore fiber preform that is manufactured by a manufacturing method according to a third embodiment.

### Description of Embodiments

Embodiments of the present invention will be described in detail below with reference to the drawings. Meanwhile, the present invention is not limited by the embodiments described below. Further, in each of the drawings, the same or corresponding components are appropriately denoted by the same reference symbols, and repeated explanation will be omitted appropriately. Furthermore, in the present specification, a cutoff wavelength or an effective cutoff wavelength indicates a cable cutoff wavelength (λcc) that is defined by ITU-T G.650.1 of International Telecommunication Union. Moreover, other terms that are not specifically defined in the present specification conform to the definitions and the measurement methods in G.650.1 and G.650.2.

### (First embodiment)

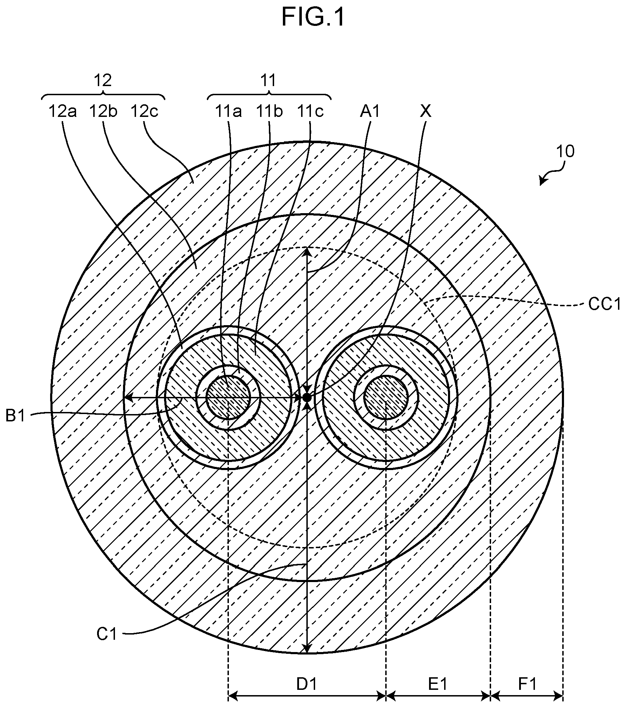

FIG. 1 is a schematic cross-sectional view of a multicore fiber that is manufactured by a manufacturing method according to a first embodiment in a cross section that is perpendicular to a longitudinal direction. A multicore fiber preform 10 is made of silica-based glass, and includes two core portions 11 and a cladding portion 12 that surrounds outer peripheries of the core portions 11. The core portions 11 are axisymmetically arranged with respect to a central axis X of the cladding portion 12. The core portions 11 are one example of a plurality of core portions.

Each of the core portions 11 includes a center core 11a, an intermediate layer 11b that surrounds an outer periphery of the center core 11a, and a trench layer 11c that surrounds an outer periphery of the intermediate layer 11b.

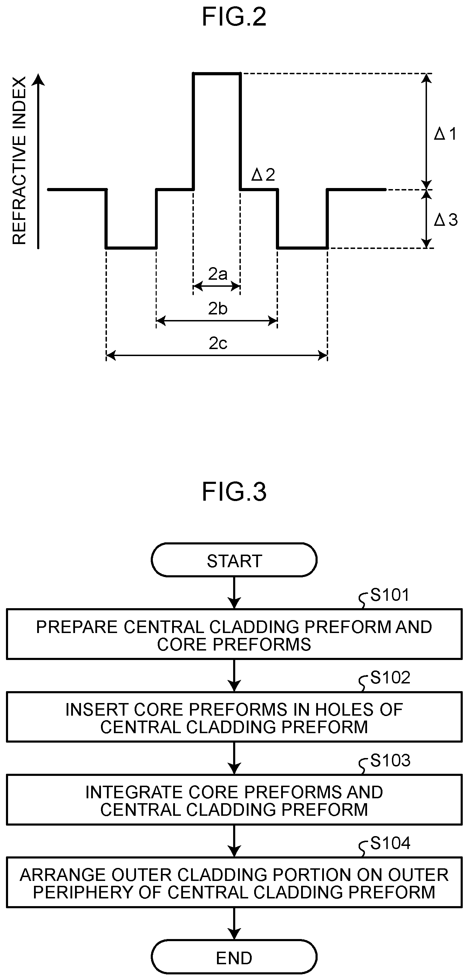

FIG. 2 is a diagram illustrating a refractive index profile of each of the core portions 11 in the multicore fiber preform 10. The core portion 11 has what is called a trench-assisted refractive index profile. In FIG. 2, a diameter of the center core 11a is represented by 2a, an outer diameter of the intermediate layer 11b is represented by 2b, and an outer diameter of the trench layer 11c is represented by 2c. An outer side of the trench layer 11c indicates a refractive index profile of the cladding portion 12. FIG. 2 indicates a case in which the cladding portion 12 is substantially made of pure silica glass. The pure silica glass is silica glass with extremely high purity, which does not substantially contain a dopant that changes the refractive index and which has a refractive index of about 1.444 at a wavelength of 1550 nm.

The center core 11a is a portion with a maximum average refractive index in the core portion 11. A maximum relative refractive-index difference of the center core 11a with respect to the refractive index of the pure silica glass is Δ1. A relative refractive-index difference of an average refractive index of the intermediate layer 11b with respect to the refractive index of the pure silica glass is Δ2. Meanwhile, Δ2 is normally set to 0% or around 0%. A relative refractive-index difference of an average refractive index of the trench layer 11c with respect to the refractive index of the pure silica glass is Δ3. Δ3 is a negative value smaller than Δ2. The core portions 11 may contain a dopant, such as germanium (Ge), fluorine (Fe), chlorine (Cl), or an alkali metal, that is used for an optical fiber. The refractive index profiles of the core portions 11 are realized by setting an addition amount of the dopant.

Referring back to FIG. 1, the cladding portion 12 has a lower refractive index than maximum refractive indices of the core portions 11. The cladding portion 12 is made of, for example, pure silica glass or fluorine-doped silica glass.

The cladding portion 12 includes first cladding portions 12a that surround the outer peripheries of the core portions 11, a second cladding portion 12b that surrounds outer peripheries of the first cladding portions 12a, and a third cladding portion 12c that surrounds an outer periphery of the second cladding portion 12b. The second cladding portion 12b and the third cladding portion 12c are concentrically arranged about the central axis X, and have approximately the same refractive indices.

Here, a circumcircle CC1 indicated by a dashed line is a circumcircle of the two first cladding portions 12a and has a center that coincides with the central axis X. A1 represents a radius of the circumcircle CC1. Further, B1 represents an outer radius of the second cladding portion 12b. Furthermore, C1 represents an outer radius of the third cladding portion 12c. A1 is one example of A that represents a radius of a circumcircle circumscribed about outer edges of a plurality of core preforms in a cross section perpendicular to a longitudinal direction of a multicore fiber preform. B1 is one example of B that represents an outer radius of a central cladding preform. C1 is one example of C that represents an outer radius of an outer cladding portion.

Moreover, D1 represents a distance (inter-core distance) between central axes of the core portions 11. E1 represents a distance from the central axis of each of the core portions 11 to an outer peripheral surface of the second cladding portion 12b. F1 represents a thickness of the third cladding portion 12c.

FIG. 3 is a flow diagram of a method of manufacturing the multicore fiber preform according to the first embodiment. First, at Step S101, a central cladding preform and core preforms are prepared. Subsequently, at Step S102, the core preforms are inserted in holes of the central cladding preform. Then, at Step S103, the core preforms and the central cladding preform are integrated. Subsequently, at Step S104, an outer cladding portion is arranged on an outer periphery of the central cladding preform. Consequently, the multicore fiber preform is manufactured.

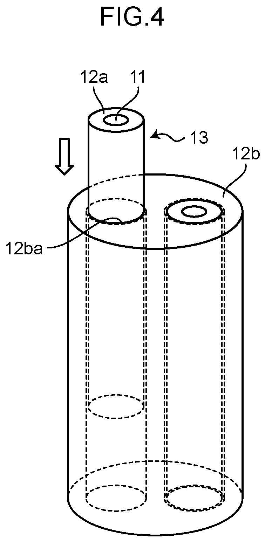

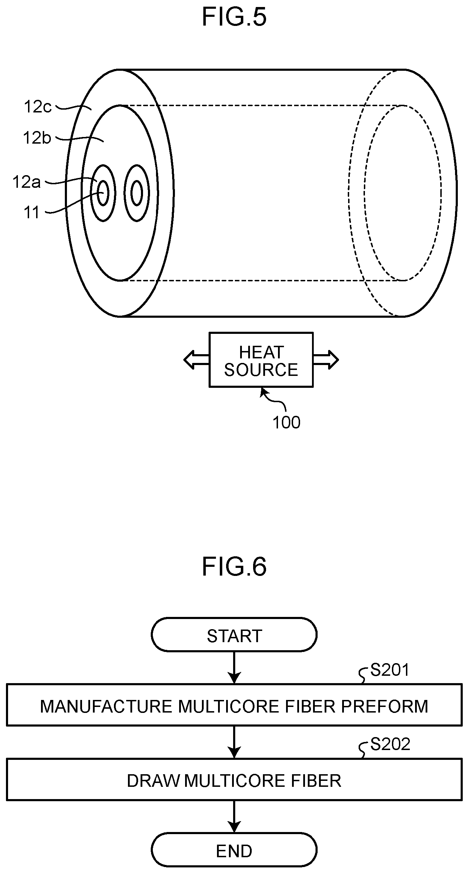

Each of processes will be described in detail below with reference to FIG. 4 and FIG. 5.

First, at Step S101, as illustrated in FIG. 4, the second cladding portion 12b as illustrated in FIG. 1 is prepared as the central cladding preform. The second cladding portion 12b is a member that forms a part of the cladding portion 12. The second cladding portion 12b is a rod-shaped preform and includes two holes 12ba as a plurality of holes that are arranged in a longitudinal direction.

Further, at Step S101, as illustrated in FIG. 4, two core preforms 13 are prepared as a plurality of core preforms. Each of the two core preforms 13 includes the core portion 11 and the first cladding portion 12a that surrounds the outer periphery of the core portion 11.

Meanwhile, the core preform 13 may be manufactured by using a certain method, such as a Vapor Axial Deposition (VAD) method or a Modified Chemical Vapor Deposition (MCVD) method. The second cladding portion 12b may be formed by arranging the holes 12ba by drilling in a glass rod that is manufactured by using the VAD method or the MCVD method. Meanwhile, appropriate clearance is set in the holes 12ba with respect to outer diameters of the core preforms 13 so as to allow insertion of the core preforms 13.

Subsequently, at Step S102, as illustrated in FIG. 4, the core preform 13 is inserted in each of the two holes 12ba of the second cladding portion 12b. Step S102 is one example of a first process.

Then, at Step S103, the second cladding portion 12b and the core preforms 13 are integrated. The integration is realized by heating the second cladding portion 12b and the core preforms 13 while vacuum states are formed in gaps between the second cladding portion 12b and the core preforms 13. Step S103 is one example of a second process.

Subsequently, at Step S104, as illustrated in FIG. 5 for example, an intermediate preform that is formed by integrating the second cladding portion 12b and the core preforms 13 is inserted in the third cladding portion 12c that serves as an outer cladding portion as illustrated in FIG. 1. The third cladding portion 12c as the outer cladding portion is also referred to as a glass jacket. Then, an outer periphery of the third cladding portion 12c is heated by a heat source 100 while a vacuum state is formed in a gap between the intermediate preform and the third cladding portion 12c. Accordingly, the third cladding portion 12c is welded onto the outer periphery of the second cladding portion 12b, so that it is possible to arrange the third cladding portion 12c on the outer periphery of the second cladding portion 12b. Consequently, the multicore fiber preform is manufactured. Step S104 as described above is one example of a third process.

According to the manufacturing method of the first embodiment as described above, the intermediate preform that is formed by integrating the core preforms 13 and the second cladding portion 12b in the second process has a smaller volume than a final multicore fiber preform that is manufactured through the third process, so that it is possible to perform the integration with a relatively small amount of heat. As a result, it is possible to reduce or prevent accidental thermal deformation and residual air bubbles, and perform the integration without a large-scale and expensive heat source. In addition, the finally-manufactured multicore fiber preform is increased in size by arranging the second cladding portion 12b as the outer cladding portion. Therefore, the manufacturing method according to the first embodiment is suitable for manufacturing of a large-scale multicore fiber preform.

Meanwhile, A1, B1, and C1 are defined in FIG. 1, but it is preferable to set B1/A1 to equal to or larger than 1.05. If B1/A1 is equal to or larger than 1.05, a defect, such as crack, is less likely to occur when the holes 12ba are formed by drilling in the second cladding portion 12b. Further, B1/A1 being equal to or smaller than 10 is preferable because heat is easily transmitted to the core preforms 13 when the second cladding portion 12b and the core preforms 13 are heated and integrated. Furthermore, it is preferable to set C1/B1 to equal to or larger than 1.10. If C1/B1 is equal to or larger than 1.10, merits of increasing the size of the preform by arranging the outer cladding portion become clear.

Moreover, among optical characteristics of a multicore fiber that is manufactured by drawing from a multicore preform that is manufactured by the manufacturing method according to the first embodiment, optical characteristics other than optical characteristics related to a confinement loss are determined at the stage of the intermediate preform. In other words, according to the manufacturing method of the first embodiment, it is possible to increase the size of the preform without changing the optical characteristics other than the optical characteristics related to the confinement loss among the optical characteristics of the intermediate preform. Meanwhile, this can be confirmed by comparing optical characteristics of a multicore fiber that is manufactured by drawing from a multicore preform that is manufactured by the manufacturing method according to the first embodiment with optical characteristics of a multicore fiber that is manufactured by drawing from the intermediate preform. However, in this case, it is needed to perform the drawing such that diameters of core portions of both of the multicore fibers become the same. Meanwhile, the optical characteristics related to the confinement loss may be, for example, a confinement loss, a cutoff wavelength, a bending loss, and the like.

### (Second embodiment)

As a second embodiment, a method of manufacturing an optical fiber by using the multicore fiber preform 10 as illustrated in FIG. 1 will be described. FIG. 6 is a flow diagram of a method of manufacturing a multicore fiber according to the second embodiment.

In the second embodiment, at Step S201, as a multicore fiber preform manufacturing process, the method of manufacturing the multicore fiber preform according to the first embodiment is performed to manufacture the multicore fiber preform 10. Subsequently, at Step S202, a drawings process of drawing from the manufactured multicore fiber preform 10 is performed. The drawing process is performed by using a well-known drawing device.

According to the second embodiment as described above, it is possible to manufacture a multicore fiber at lower cost by using the large-scale multicore fiber preform 10 that is appropriately manufactured.

### (Third embodiment)

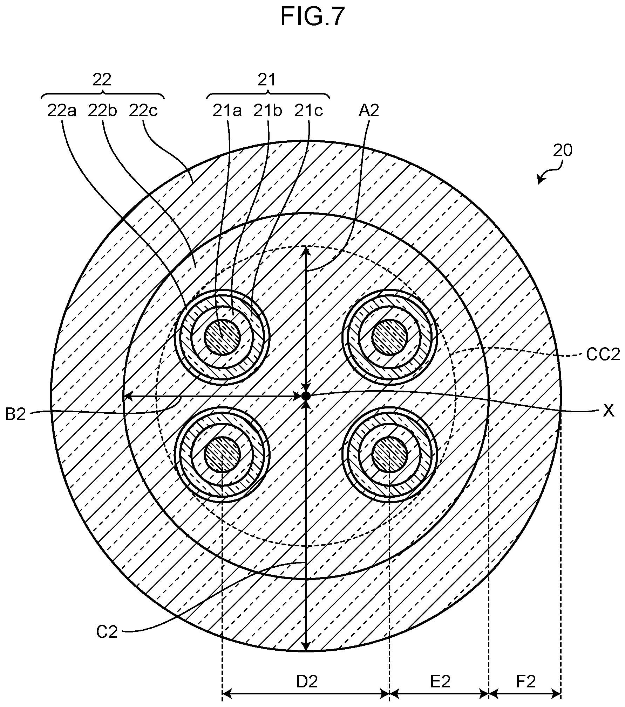

FIG. 7 is a schematic cross-sectional view of a multicore fiber that is manufactured by a manufacturing method according to a third embodiment in a cross section that is perpendicular to a longitudinal direction. A multicore fiber preform 20 is made of silica-based glass, and includes four core portions 21 and a cladding portion 22 that surrounds outer peripheries of the core portions 21. The core portions 21 are axisymmetically arranged with respect to a central axis X of the cladding portion 22. The core portions 21 are one example of a plurality of core portions.

Each of the core portions 21 includes, similarly to the core portions 11 in FIG. 1, a center core 21a, an intermediate layer 21b that surrounds an outer periphery of the center core 21a, and a trench layer 21c that surrounds an outer periphery of the intermediate layer 21b. Further, each of the core portions 21 has a trench-assisted refractive index profile as illustrated in FIG. 2, similarly to the core portions 11. The refractive index profiles of the core portions 11 are realized by setting an addition amount of the dopant used for the optical fiber as described above.

The cladding portion 22 has a lower refractive index than maximum refractive indices of the core portions 21. The cladding portion 22 is made of, for example, pure silica glass or fluorine-doped silica glass.

The cladding portion 22 includes first cladding portions 22a that surround the outer peripheries of the core portions 21, a second cladding portion 22b that surrounds outer peripheries of the first cladding portions 22a, and a third cladding portion 22c that surrounds an outer periphery of the second cladding portion 22b. The second cladding portion 12b and the third cladding portion 12c are concentrically arranged about the central axis X, and have approximately the same refractive indices.

Here, a circumcircle CC2 indicated by a dashed line is a circumcircle of the four first cladding portions 22a and has a center that coincides with the central axis X. A2 represents a radius of the circumcircle CC2. Further, B2 represents an outer radius of the second cladding portion 22b. Furthermore, C2 represents an outer radius of the third cladding portion 22c. A2 is one example of A that represents a radius of a circumcircle circumscribed about outer edges of a plurality of core preforms in a cross section perpendicular to a longitudinal direction of a multicore fiber preform. B2 is one example of B that represents an outer radius of a central cladding preform. C2 is one example of an outer radius of an outer cladding portion.

Moreover, D2 represents a distance (inter-core distance) between central axes of the core portions 21. E2 represents a difference between the outer diameter of the second cladding portion 22b and 1/2 of the inter-core distance. F2 represents a thickness of the third cladding portion 12c.

The multicore fiber preform 20 as described above may be manufactured by the same manufacturing method as the method of manufacturing the multicore fiber preform according to the first embodiment. Further, with use of the multicore fiber preform 20 as described above, it is possible to manufacture a multicore fiber by the same manufacturing method as the method of manufacturing the multicore fiber according to the second embodiment. The multicore fiber that is manufactured as described above is manufactured by using the large-scale multicore fiber preform 20 that is appropriately manufactured, so that cost is further reduced.

Meanwhile, in the embodiments as described above, the core preforms include the first cladding portions, but the core preforms need not always include the first cladding portions. In this case, the core preforms are formed of only core portions. Further, a circumcircle in this case is a circumcircle of a plurality of core portions, where a center of the circumcircle coincides with a central axis of the cladding portion.

Further, in the embodiments as described above, the outer cladding portion is arranged by the jacket method, but the outer cladding portion may be arranged by the deposition method. When the deposition method is used, the outer cladding portion may be formed by depositing a soot by blowing a raw material gas of the outer cladding portion onto the central cladding portion by a burner and vitrifying the soot.

### (First example and First comparative example)

As a first example, a multicore fiber preform that is configured as illustrated in FIG. 1 was manufactured by the manufacturing method according to the first embodiment. Core preforms and a second cladding portion were manufactured by the flame deposition method based on the VAD method. The core preforms did not include first cladding portions, but include only core portions.

As the core portions, center cores were made of silica glass doped with chlorine and potassium (100 wtppm). An intermediate layer and a trench layer were made of silica-based glass doped with fluorine. Δ1, Δ2, and Δ3 were set to 0.10%, -0.17%, and -0.50%, respectively. Further, 2a was set to 5.25 mm, 2b was set to 7.875 mm, and 2c was set to 15.75 mm. Therefore, an outer diameter of each of the core preforms was 15.75 mm.

A second cladding portion was made of silica glass doped with fluorine. A diameter of the second cladding portion was set to 46 mm, and a hole diameter of each of two holes was set to 16 mm. Further, a relative refractive-index difference of the second cladding portion with respect to the pure silica glass was set to -0.17%.

An intermediate preform was manufactured by integrating the second cladding portion and the two core preforms while causing a dehydration gas to flow through gaps. Each of positions and non-circularity of the core portions and non-circularity of the second cladding portion in the intermediate preform was, when checked, in an approximately good condition, and good integration was realized.

Subsequently, a multicore fiber preform was manufactured by arranging a third cladding portion on an outer periphery of the second cladding portion of the intermediate preform by using the deposition method. A relative refractive-index difference of the third cladding portion with respect to the pure silica glass was set to - 0.17%. An outer diameter of the third cladding portion was set to 62.5 mm.

Further, in FIG. 1, D1 was set to 20 mm, E1 was set to 13 mm, and F1 was set to 8.25 mm.

Thereafter, a multicore fiber with a clad diameter of 125 µm was drawn from the multicore fiber preform that was manufactured by the manufacturing method of the first embodiment. In the drawn multicore fiber, 2a, 2b, and 2c (see FIG. 2) were set to 10.5 µm, 15.75 µm, and 31.5 µm, respectively. Therefore, b/a, and /a were 1.5 and 3.0, respectively. Further, sizes corresponding to D1, E1, and F1 in FIG. 1 were 40 µm, 26 µm, and 16.5 µm, respectively.

In the multicore fiber that was manufactured as described above, cross talk between the two cores at a wavelength of 1550 nm was -32 dB per 100 km, which was approximately the same as a design value. Further, other optical characteristics were as indicated by Table 1. Meanwhile, in Table 1, "Aeff" represents an effective core area. Furthermore, values of a transmission loss, Aeff, and a bending loss were obtained at a wavelength of 1550 nm. Moreover, the value of the bending loss was obtained with a bending diameter of 30 mm. As illustrated in Table 1, all of the transmission loss, the effective core area, the cable cutoff wavelength, and the bending loss indicate good characteristics as designed.

**Table 1**

| | Transmission Loss [dB/km] | Aeff [µ/m²] | λcc [nm] | Bending Loss (30 nm) [dB/m] |
|---|---|---|---|---|
| Core 1 | 0.154 | 111 | 1406 | 0.21 |
| Core 2 | 0.153 | 112 | 1412 | 0.16 |

In addition, as a first comparative example, a central cladding preform with the same configuration as the second cladding portion except for having a larger outer diameter of 62.5 mm was prepared and a process of integration with core preforms was performed, but it was often the case that voids remained between the core preforms and the central cladding preform and adequate integration was not performed, and it was often the case that, even when the integration was successful, non-circularity of the core portions and non-circularity of the cladding portion increased.

### (Second example and Second comparative example)

As a second example, a multicore fiber preform that is configured as illustrated in FIG. 7 was manufactured by the same manufacturing method as the manufacturing method according to the first embodiment. Core preforms and a second cladding portion were manufactured by the flame deposition method based on the VAD method. The core preforms did not include first cladding portions, but include only core portions.

As the core portions, center cores were made of silica glass doped with chlorine and potassium (100 wtppm). An intermediate layer and a trench layer were made of silica-based glass doped with fluorine. Δ1, Δ2, and Δ3 were set to 0.10%, -0.27%, and -0.45%, respectively. Further, 2a was set to 4.5 mm, 2b was set to 8.1 mm, and 2c was set to 10.8 mm. Therefore, an outer diameter of each of the core preforms was 10.8 mm.

A second cladding portion was made of silica glass doped with fluorine. A diameter of the second cladding portion was set to 42.5 mm, and a hole diameter of each of four holes was set to 11 mm. Further, a relative refractive-index difference of the second cladding portion with respect to the pure silica glass was set to -0.27%.

An intermediate preform was manufactured by integrating the second cladding portion and the four core preforms while causing a dehydration gas to flow through gaps. Each of positions and non-circularity of the core portions and non-circularity of the second cladding portion in the intermediate preform was, when checked, in an approximately good condition, and good integration was realized.

Subsequently, a multicore fiber preform was manufactured by arranging a third cladding portion on an outer periphery of the second cladding portion of the intermediate preform by using the deposition method. Further, a relative refractive-index difference of the third cladding portion with respect to the pure silica glass was set to -0.27%. An outer diameter of the third cladding portion was set to 62.5 mm.

Furthermore, in FIG. 7, D2 was set to 20 mm, E2 was set to 11.25 mm, F2 was set to 10 mm.

Thereafter, a multicore fiber with a clad diameter of 125 µm was drawn from the multicore fiber preform that was manufactured by the manufacturing method of the second embodiment. In the drawn multicore fiber, 2a, 2b, and 2c (see FIG. 2) were set to 9 µm, 16.2 µm, and 21.6 µm, respectively. Therefore, b/a, and /a were 1.8 and 2.4, respectively. Further, sizes corresponding to D2, E2, and F2 in FIG. 7 were 40 µm, 22.5 µm, and 20 µm, respectively.

In the multicore fiber that was manufactured as described above, cross talk between the two cores at a wavelength of 1550 nm was in a range of -35±3 dBm per 100 km, which was approximately the same as a design value. Further, other optical characteristics were as indicated by Table 2. As illustrated in Table 2, all of a transmission loss, an effective core area, a cable cutoff wavelength, and a bending loss indicate good characteristics as designed.

**Table 2**

| | Transmission Loss [dB/km] | Aeff [µ/m²] | λcc [nm] | Bending Loss (30 nm) [dB/m] |
|---|---|---|---|---|
| Core 1 | 0.153 | 79 | 1362 | 0.05 |
| Core 2 | 0.154 | 80 | 1374 | 0.04 |
| Core 3 | 0.155 | 81 | 1390 | 0.04 |
| Core 4 | 0.154 | 79 | 1358 | 0.07 |

In addition, as a second comparative example, a central cladding preform with the same configuration as the second cladding portion except for having a larger outer diameter of 62.5 mm was prepared and a process of integration with core preforms was performed, but it was often the case that voids remained between the core preforms and the central cladding preform and adequate integration was not performed, and it was often the case that, even when the integration was successful, non-circularity of the core portions and non-circularity of the cladding portion increased.

Meanwhile, in the embodiments as described above, the number of the core portions is set to two or four, but the number of the core portion is not specifically limited, and may be, for example, seven or nineteen. Further, in the embodiments as described above, the refractive indices of the central cladding preform and the outer cladding portion are equal to each other, but need not be equal to each other or may be approximately equal to each other. The refractive indices approximately equal to each other indicate that, for example, a difference of an average relative refractive-index difference with respect to the pure silica glass is equal to or smaller than 0.03%.

Furthermore, the present invention is not limited by the embodiments as described above. Appropriate combinations of the components as described above may be included in the present invention. Moreover, additional advantageous effects and modifications will readily occur to those skilled in the art. Therefore, the invention in its broader aspects is not limited to the embodiments as described above, and various modifications may be made.

### Industrial Applicability

The present invention may be used for manufacturing a multicore fiber.

### Reference Signs List

10, 20 multicore fiber preform
11, 21 core portion
11a center core
11b intermediate layer
11c trench layer
12, 22 cladding portion
12a, 22a first cladding portion
12b, 22b second cladding portion
12ba hole
12c, 22c third cladding portion
13 core preform
21a center core
21b intermediate layer
21c trench layer
100 heat source
CC1, CC2 circumcircle
X central axis

## Claims

1. A method of manufacturing a multicore fiber preform including: a plurality of core portions; and a cladding portion surrounding outer peripheries of the plurality of core portions and having a lower refractive index than maximum refractive indices of the plurality of core portions, the method comprising:
a first process of inserting each of core preforms each including one of the core portions into each of holes arranged in a longitudinal direction in a central cladding preform, the central cladding preform having a rod-shape and being configured to form a part of the cladding portion;
a second process of integrating the central cladding preform and the core preforms; and
a third process of arranging an outer cladding portion configured to form a part of the cladding portion on an outer periphery of the central cladding preform.

2. The method of manufacturing the multicore fiber preform according to claim 1, wherein the third process includes arranging the outer cladding portion by using one of a deposition method or a jacket method.

3. The method of manufacturing the multicore fiber preform according to claim 1, wherein the second process includes heating the central cladding preform and the core preforms while forming vacuum states in gaps between the central cladding preform and the core preforms.

4. The method of manufacturing the multicore fiber preform according to claim 1, wherein refractive indices of the central cladding preform and the outer cladding portion are approximately equal to each other.

5. The method of manufacturing the multicore fiber preform according to claim 1, wherein when a radius of a circumcircle circumscribed about outer edges of the plurality of core preforms in a cross section perpendicular to a longitudinal direction of the multicore fiber preform is denoted by A and an outer radius of the central cladding preform is denoted by B, B/A is equal to or larger than 1.05.

6. The method of manufacturing the multicore fiber preform according to claim 5, wherein B/A is equal to or smaller than 10.

7. The method of manufacturing the multicore fiber preform according to claim 1, wherein when an outer radius of the central cladding preform in a cross section perpendicular to a longitudinal direction of the multicore fiber preform is denoted by B and an outer radius of the outer cladding portion is denoted by C, C/B is equal to or larger than 1.10.

8. A method of manufacturing a multicore fiber comprising:
a multicore fiber preform manufacturing process of performing the method of manufacturing the multicore fiber preform according to any one of claims 1 to 7; and
a drawing process of drawing a multicore fiber from the manufactured multicore fiber preform.
